(19) Europäisches Patentamt
European Patent Office
Office européen des brevets

(11) **EP 3 798 791 A1**

(12) **EUROPEAN PATENT APPLICATION**

(43) Date of publication:
**31.03.2021 Bulletin 2021/13**

(51) Int Cl.:
**G06F 1/16** *(2006.01)* **E05B 65/00** *(2006.01)*

(21) Application number: **20181139.5**

(22) Date of filing: **19.06.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.09.2019 US 201916582932**

(71) Applicant: **Intel Corporation**
**Santa Clara, CA 95054 (US)**

(72) Inventors:
• **Larsen, Denica N.**
**Santa Clara, CA 95054 (US)**
• **Ghosh, Prosenjit**
**Santa Clara, CA 95054 (US)**
• **Kulkarni, Shantanu D.**
**Santa Clara, CA 95054 (US)**

(74) Representative: **Rummler, Felix et al**
**Maucher Jenkins**
**26 Caxton Street**
**London SW1H 0RJ (GB)**

(54) **GRAVITY-ACTIVATED MAGNETIC LATCHING SYSTEM**

(57) An electronic device has a body with a first portion (e.g., a lid) and a second portion (e.g., a base). The first portion includes magnets, while the second portion includes attractive elements that the magnets are attracted to. The first and second portions may be coupled together with hinges. The force of magnetic attraction between the magnets and the attractive elements maintains the body in a closed configuration at certain orientations of the body (e.g., at certain angles that the body is tilted relative to an axis in the direction of the Earth's gravity). When the body is positioned at a threshold angle with respect to the axis in the direction of the Earth's gravity, a separating force acting on the (first or second) portion of the body that is closer to the Earth becomes greater than the force of magnetic attraction, causing the portions to separate and the body to be in an open configuration.

FIG. 1

EP 3 798 791 A1

**Description**

## BACKGROUND

This disclosure relates generally to latching devices and systems for electronic devices, and more particularly to magnetic latching devices and systems for hinged electronic devices, such as notebooks, laptops, 2-in-1 laptops, convertible laptops and tablets, and so on.

This section is intended to introduce the reader to various aspects of art that may be related to aspects of the present disclosure, which are described and/or claimed below. This discussion is believed to be helpful in providing the reader with background information to facilitate a better understanding of the various aspects of the present disclosure. Accordingly, it may be understood that these statements are to be read in this light, and not as admissions of prior art.

Certain electronic devices, such as notebooks, laptops, 2-in-1 laptops, convertible laptops and tablets, and so on, may be hinged. For example, the electronic device may include a lid (which typically includes a display) and a base (which typically includes an input device such as a keyboard) that are pivotally coupled together by one or more hinges.

To open such an electric device, a variety of latching devices may be used. However, these latching and devices may take up valuable space in the electronic device, which could be used instead be used for processing, memory, and/or power components, thus decreasing the processing capabilities, memory capacity, and/or power capacity of the electronic device. Additionally or alternatively, these latching devices may require costly implementation to the dimensions of the lid and/or the base. In some cases, the latching devices may operate using power supplied by a power source of the electronic device, resulting in power inefficiency each time the latching devices are used. Moreover, such latching devices may be controlled by a controller of the electronic device, thus also using processing, memory, and/or power resources of the electronic device.

## BRIEF DESCRIPTION OF THE DRAWINGS

Various aspects of this disclosure may be better understood upon reading the following detailed description and upon reference to the drawings in which:

FIG. 1 is a perspective diagram of an electronic device having a body in an open configuration, according to embodiments of the present disclosure;

FIG. 2 is a perspective diagram of the electronic device of FIG. 1 having the body in a closed configuration, according to embodiments of the present disclosure;

FIG. 3 is an interior view of a lid of the body of the electronic device of FIG. 1, according to embodiments of the present disclosure;

FIG. 4 is an interior view of a base of the body of the electronic device of FIG. 1, according to embodiments of the present disclosure;

FIG. 5 is a front view of the body of the electronic device of FIG. 1 in the closed configuration, according to embodiments of the present disclosure;

FIG. 6 is a perspective diagram of the body of the electronic device of FIG. 1 in the closed configuration, and the forces that cause the body to close and/or open, according to embodiments of the present disclosure;

FIG. 7 is a perspective diagram of the body of the electronic device of FIG. 1 in the closed configuration when the body is parallel or approximately parallel with an axis in the direction of the Earth's gravity, according to embodiments of the present disclosure;

FIG. 8 is a perspective diagram of the body of the electronic device of FIG. 7 in the closed configuration when the body is slightly tilted, but at an angle less than a threshold angle in relation to the axis in the direction of the Earth's gravity, according to embodiments of the present disclosure;

FIG. 9 is a perspective diagram of the body of the electronic device of FIG. 7 in the closed configuration when the body is tilted at an angle greater than or equal to the threshold angle in relation to the axis in the direction of the Earth's gravity, according to embodiments of the present disclosure;

FIG. 10 is a perspective diagram of the body of the electronic device of FIG. 9 in the open configuration as a result of tilting the body at the angle greater than or equal to the threshold angle in relation to the axis in the direction of the Earth's gravity, according to embodiments of the present disclosure;

FIG. 11 is a perspective diagram of the electronic device of FIG. 1 having hinges that enable 360 degrees or near-360 degrees of pivoting, according to embodiments of the present disclosure;

FIG. 12 is a first perspective diagram of the electronic device of FIG. 11 with the lid bent at an angle of 360 degrees respective to the base, such that the electronic device is in a second closed configuration, according to embodiments of the present disclosure; and

FIG. 13 is a second perspective diagram of the electronic device of FIG. 12 in the second closed configuration, according to embodiments of the present disclosure.

## DETAILED DESCRIPTION

One or more specific embodiments will be described below. In an effort to provide a concise description of these embodiments, not all features of an actual implementation are described in the specification. It may be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it may be appreciated that such a development effort might be complex and time consuming, but would nevertheless be a routine undertaking of design, fabrication, and manufacture for those of ordinary skill having the benefit of this disclosure.

Certain electronic devices, such as notebooks, laptops, 2-in-1 laptops, convertible laptops and tablets, and so on, may be hinged. For example, the electronic device may include a lid (which typically includes a display) and a base (which typically includes an input device such as a keyboard) that are pivotally coupled together by one or more hinges. Current trends are to make these hinged electronic devices thinner and slimmer for portability and cosmetic reasons. This may result in a thinner lid, a thinner base, and a smaller gap between the lid and base. However, it may be difficult for a user to grasp or grip the thinner lid, the thinner base, and/or the smaller gap to open the electronic device.

While some solutions call for a finger access point or divot to be cut out of top and/or vertical surfaces of the base (e.g., to enable a user to gain purchase on a bottom surface of the lid), the area lost to accommodate the finger access point or divot could instead have been used for processing, memory, and/or power components, thus decreasing the processing capabilities, storage space, and/or power capacity of the electronic device. Moreover, providing the finger access point or divot in an otherwise interrupted vertical surface of the base may incur an excessive manufacturing cost or an unappealing aesthetic. Additional or alternative solutions may include latching devices that operate using power supplied by a power source of the electronic device, resulting in energy loss each time the latching devices are used. Moreover, such latching devices may be controlled by a controller of the electronic device, thus also using processing, memory, and/or power resources of the electronic device.

Thus, the present disclosure includes systems and devices having a body with a first portion (e.g., a lid) and a second portion (e.g., a base). The first portion may have one or more magnets, while the second portion may have one or more attractive elements (e.g., made of ferrous material) that the one or more magnets are attracted to. The first and second portions may be coupled together with one or more hinges. As such, the force magnetic attraction between the magnets and the attractive elements may maintain the body in a closed configuration at certain orientations of the body (e.g., at certain angles that the body is tilted relative to an axis in the direction of the Earth's gravity). However, when the body is positioned at a threshold angle with respect to the axis in the direction of the Earth's gravity, a separating force acting on the (first or second) portion of the body that is closer to the Earth becomes greater than the force of magnetic attraction, causing the portions to separate and the body to be in an open configuration.

In some embodiments, the hinges may enable 360 degrees of pivoting, such that, in a first closed configuration, a bottom surface of the first portion (e.g., a lid) may be in contact with a top surface of the second portion (e.g., a base), and, in a second closed configuration, a top surface of the first portion may be in contact with a bottom surface of the second portion. The presently disclosed systems and devices may maintain the body in closed configurations at certain orientations of the body in either closed configuration, and, when the body is positioned at a respective threshold angle with respect to the axis in the direction of the Earth's gravity, the separating force of acting on the portion of the body that is closer to the Earth becomes greater than the force of magnetic attraction, causing the portions to separate and the body to be in the open configuration.

The one or more magnets and the one or more attractive elements may be dimensioned to fit into dead spaces (e.g., spaces where there are no components or circuitry) in the portions of the body and/or to have a decreased or minimum surface area. As such, the presently disclosed systems and devices may avoid taking excessive valuable space in the electronic device. With this more compact latching system, additional components may fit into the device, such as processing, memory, and/or power components, thus increasing the processing capabilities, memory capacity, and/or power capacity of the electronic device. Costly design implementations to the dimensions of the lid and/or the base may also be avoided, as certain surfaces (e.g., vertical surfaces) of the lid and base may be uninterrupted and still accommodate the magnets and attractive elements (e.g., in the interiors of the lid and base). Moreover, the magnets and attractive elements may not require a power source or a controller for operation, thus avoiding power or processing resource usage during operation and avoiding memory usage for storing instructions associated with operation.

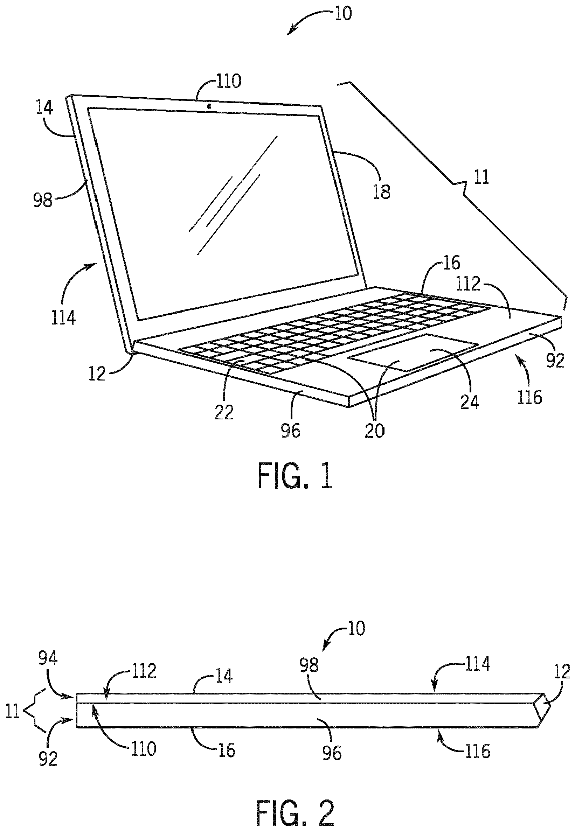

With the foregoing in mind, FIG. 1 is a perspective diagram of an electronic device 10 having a body 11 in an open configuration, according to embodiments of the present disclosure. The electronic device 10 may include, for example, a notebook, laptop, 2-in-1 laptop, convertible laptop, tablet, a computing device, or any other suitable device that includes a hinge or hinging component 12. In particular, the body 11 of the electronic device 10 may include a first portion 14 (e.g., a lid) and a second portion 16 (e.g., a base) that are pivotally/rotatably coupled together by the hinge 12. As illustrated, the lid 14 may include a display 18 and the base 16 may include one or more input devices 20, such as a keyboard 22 and a trackpad 24, though it is contemplated that the lid 14 and the base 16 may exclude any of these components and/or include any additional suitable components. Moreover, while the remainder of the present disclosure refers to a single hinge 12, it should be understood that any suitable number of hinges 12 is contemplated (e.g., between 1 and 10 hinges) that are used to couple the lid 14 to the base 16. The lid 14 to the base 16 may be pivotally urged together to place the body 11 of the electronic device 10 in a closed configuration, as illustrated in FIG. 2. The body 11 may be in the closed configuration when the lid 14 and the base 16 come together and/or are in contact with one another, when an angle between the lid 14 and the base 16 is less than or equal to a threshold angle (e.g., between 0° and 180°, such as 0°, 5°, 10°, 15°, 45°, 80°, or 90°), and so on.

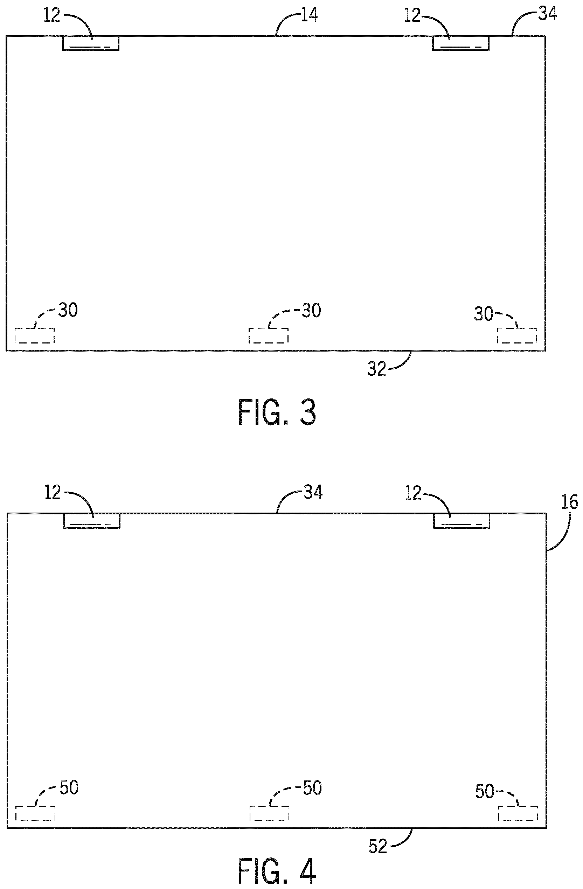

FIG. 3 is an interior view of the lid 14 of the body 11 of the electronic device 10 of FIG. 1, according to embodiments of the present disclosure. As illustrated, magnets 30 are embedded in the interior of the lid 14 near a front edge 32 of the lid 14 opposite a back or hinge edge 34 of the lid 14 (e.g., the edge at which the hinges 12 are disposed nearest to). While the magnets are illustrated at the front edge 32, it should be understood that the two side edges (e.g., left and right edges) may also or alternatively provide suitable positions to dispose the magnets and provide a sufficient force of magnetic attraction (as discussed in further detail below). While three magnets 30 are illustrated in the lid 14 of FIG. 3, it should be understood that any suitable number of magnets 30 that provide the sufficient force of magnetic attraction is contemplated.

Similarly, FIG. 4 is an interior view of the base 16 of the body 11 of the electronic device 10 of FIG. 1, according to embodiments of the present disclosure. As illustrated, attractive elements 50 are embedded in the interior of the base 16 near a front edge 52 of the base 16 opposite a back or hinge edge 54 of the base 16 (e.g., the edge at which the hinges 12 are disposed nearest to). The attractive elements 50 may be any suitable component that generates magnetic attraction with the magnets 30, such as ferrous material (e.g., steel, stainless steel, carbon steel, cast iron, and so on) or magnets of opposite polarity in relation to the magnets 30. Moreover, in some embodiments, the magnets 30 and/or the attractive elements 50 may be electromagnets that are activated by supplying power (e.g., from a battery). While attractive elements 50 are illustrated in the base 16 of FIG. 4, it should be understood that any suitable number and/or suitable positions of attractive elements 50 that align with the magnets 30 of the lid 14 is contemplated. For example, even though three attractive elements 50 that align with the magnets 30 of the lid 14 of FIG. 3 are illustrated in FIG. 4, in one embodiment, the base 16 may have a single attractive element 50 that spans the front edge 52, which is aligned with each of the three magnets 30.

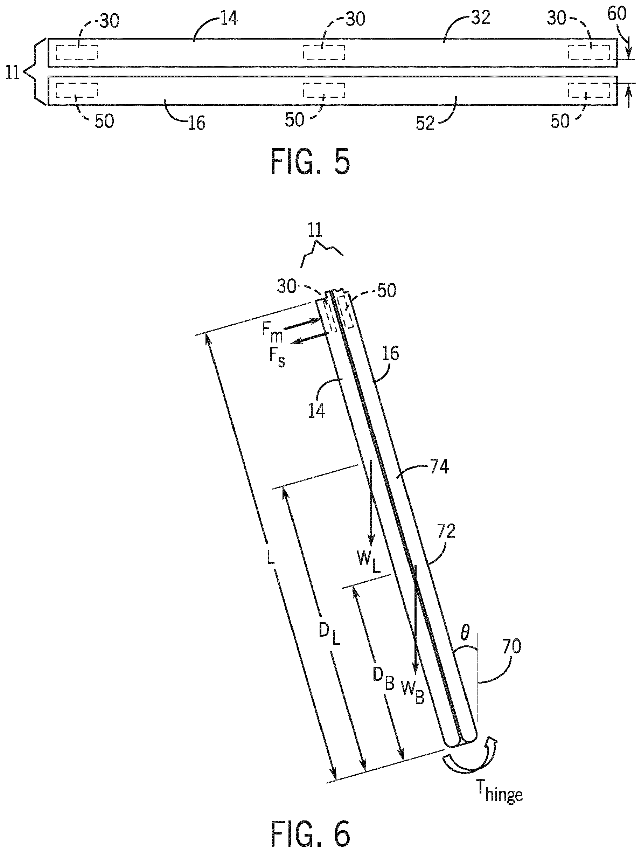

FIG. 5 is a front view of the body 11 of the electronic device 10 of FIG. 1 in the closed configuration, according to embodiments of the present disclosure. As illustrated, the magnets 30 along the front edge 32 of the lid 14 are aligned with the attractive elements 50 along the front edge 52 of the base 16. As such, magnetic attraction may be exhibited between each magnet 30 and each corresponding attractive element 50. The force of magnetic attraction between each magnet 30 and each corresponding attractive element 50 may be directly proportional to the distance 60 between the magnet 30 and the corresponding attractive element 50. Moreover, while FIGS. 3-5 illustrate the magnets 30 in the lid 14 and the attractive elements 50 (which may also be magnets, though having opposite polarity in relation to the magnets 30) in the base 16, it should be understood that the magnets 30 may instead be disposed in the base 16 while the attractive elements 50 are disposed in the lid 14.

The magnets 30 and the attractive elements 50 may be configured such that the force of magnetic attraction between the magnets 30 and the attractive elements 50 maintain the body 11 of the electronic device 10 in a closed configuration at certain orientations of the body 11 (e.g., at certain angles of the body 11 relative to an axis in the direction of the Earth's gravity). However, when the body 11 is positioned at a threshold angle with respect to the axis in the direction of the Earth's gravity, a separating force acting on the portion (e.g., the lid 14 or the base 16) of the body 11 that is closer to the Earth becomes greater than the force of magnetic attraction, causing the portions 14, 16 to separate and the body 11 to be in an open configuration. In particular, the body 11 may be in the open configuration when the lid 14 and the base 16 are not in contact with one another (excepting that they are joined via the hinges 12), when an angle between the lid 14 and the base 16 is greater than a threshold angle (e.g., between 0° and 180°, such as 0°, 5°, 10°, 15°, 45°, 80°, or 90°), and so on. For example, the body 11 may be in the closed configuration when the lid 14 and the base 16 form an angle of approximately 0°, and the body 11 may be in the open configuration when the lid 14 and the base 16 form an angle of greater than approximately 0°.

In particular, FIG. 6 is a perspective diagram of the body 11 of the electronic device 10 of FIG. 1 in the closed configuration, and the forces that cause the body 11 to close and/or open, according to embodiments of the present disclosure. As illustrated, the force of magnetic attraction between the magnets 30 in the lid 14 and the attractive elements 50 in the base 16, which urges the body 11 into the closed configuration, is labeled as $F_m$. The separating force that urges the body 11 into the open configuration is labeled as $F_s$. When the separating force $F_s$ is greater or equal to the force of magnetic attraction $F_m$, the body 11 opens. Otherwise, the separating force $F_s$ is less than the force of magnetic attraction $F_m$, the body 11 closes.

FIG. 6 also illustrates the forces and dimensions that may affect the magnitude of the separating force $F_s$. The angle $\theta$ represents the tilt angle of the body 11 (e.g., with respect to an axis 70 in the direction of the Earth's gravity). $D_B$ represents the distance of the center of gravity 72 of the base 16 to the hinge 12 of the body 11, and $W_B$ represents the weight of the base 16 (e.g., at the center of gravity 72 of the base 16) when the body 11 is tilted at the angle $\theta$. Similarly, $D_L$ represents the distance of the center of gravity 74 of the lid 14 to the hinge 12 of the body 11, and $W_L$ represents the weight of the lid 14 (e.g., at the center of gravity 74 of the lid 14) when the body 11 is tilted at the angle $\theta$. $L$ is the length (e.g., depth) of the body 11. $T_{hinge}$ is the total torque applied by the hinges 12 at the angle $\theta$.

With this in mind, the separating force $F_s$ may be represented by the equation, assuming that the lid 14 is closer to the ground/Earth and the base 16 further away from the ground/Earth:

$$F_s = \frac{(W_L \times \sin\theta \times D_L) - T_{hinge} - (W_B \times \sin\theta \times D_B)}{L} \qquad \text{(Equation 1)}$$

If the base 16 is closer to the ground/Earth and the lid 14 further away from the ground/Earth, then $W_L$ (i.e., the weight of the lid 14) and $W_B$ (i.e., the weight of the base 16) are switched in Equation 1. A threshold angle $\theta_{threshold}$ may be defined at which the separating force $F_s$ is greater or equal to the force of magnetic attraction $F_m$. Thus, when the body 11 is tilted at an angle greater to or equal to the threshold angle $\theta_{threshold}$, the body 11 opens or remains open. If the body 11 is tilted at an angle less than the threshold angle $\theta_{threshold}$, the separating force $F_s$ is less than the force of magnetic attraction $F_m$, and the body 11 closes or remains closed.

The threshold angle $\theta_{threshold}$ may be determined and/or affected by both the force of magnetic attraction $F_m$ (between the magnets 30 in the lid 14 and the attractive elements 50 in the base 16) and the separating force $F_s$. Based on Equation 1, the separating force $F_s$ is in turn determined and/or affected by the position of the center of gravity 74 of the lid 14, the weight $W_L$ of the lid 14 (e.g., at the center of gravity 74 of the lid 14), the center of gravity 72 of the base 16, the weight of the base 16 (e.g., at the center of gravity 74 of the base 16), the length $L$ of the body 11, and the torque $T_{hinge}$ applied by the hinges 12), any of the magnets 30, the attractive elements 50, the position of the center of gravity 74 of the lid 14, the weight $W_L$ of the lid 14 (e.g., at the center of gravity 74 of the lid 14), the center of gravity 72 of the base 16, the weight of the base 16 (e.g., at the center of gravity 74 of the base 16), the length $L$ of the body 11, and the torque $T_{hinge}$ applied by the hinges 12. Thus, any combination of the magnets 30 (including the number of magnets 30, properties of the magnets 30 (such as the strength, size, and so on, of the magnets 30), and so on), the attractive elements 50 (including the number of attractive elements 50, properties of the attractive elements 50 (such as magnetic attractiveness, size, and so on, of the attractive elements 50), and so on), the position of the center of gravity 74 of the lid 14, the weight $W_L$ of the lid 14 (e.g., at the center of gravity 74 of the lid 14), the center of gravity 72 of the base 16, the weight of the base 16 (e.g., at the center of gravity 74 of the base 16), the length $L$ of the body 11, and the torque $T_{hinge}$ applied by the hinges 12, may be designed and/or adjusted to set or select the threshold angle $\theta_{threshold}$.

In the present disclosure, the threshold angle $\theta_{threshold}$ may be designed any suitable angle that would be convenient for a user to tilt the electronic device 10, in possible angle ranges between 0° and 90°, between 5° and 80°, between 10° and 70°, between 20° and 60°, between 30° and 50°, and so on. For example, the threshold angle $\theta_{threshold}$ may be approximately 20°, 40°, and so on. In some cases, the threshold angle $\theta_{threshold}$ may be selected based in part on preventing the body 11 from opening at certain angles. For example, it may be undesirable for the body 11 to open while the electronic device 10 is being carried in a bag. Generally, the body 11 may not open due to the bottommost portion of the electronic device 10 (e.g., the lid 14 or the base 16) resting on a surface of the bag, for example. However, for certain smaller angles (e.g., 1°-2°), the lid 14 or the base 16 may not be supported by a surface of the bag. As such, the threshold angle $\theta_{threshold}$ may be selected to be greater than these angles (e.g., greater than 5°, for example.)

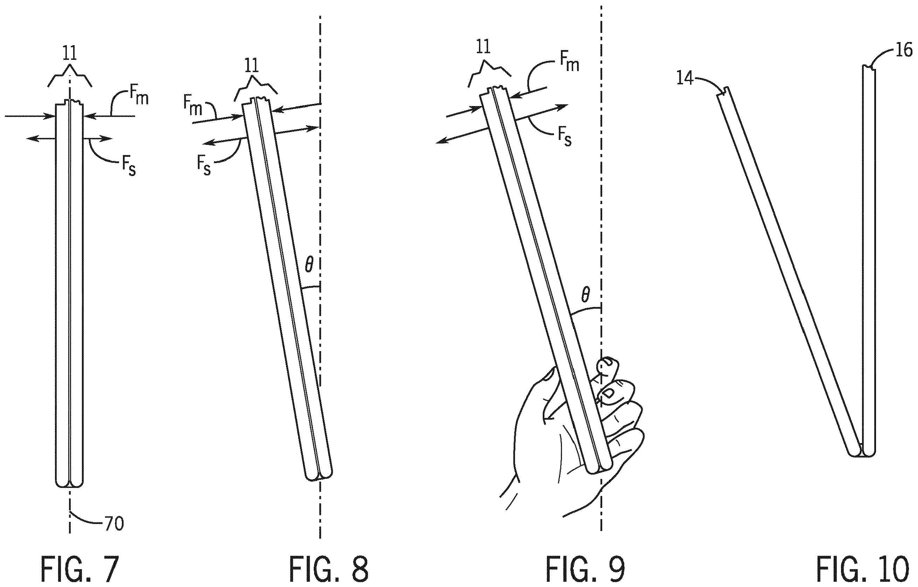

As an illustrative example, FIG. 7 is a perspective diagram of the body 11 of the electronic device 10 of FIG. 1 in the closed configuration when the body 11 is parallel or approximately parallel with the axis 70 in the direction of the Earth's gravity, according to embodiments of the present disclosure. Thus, the tilt angle $\theta$ between the body 11 of the electronic device 10 and the axis 70 in the direction of the Earth's gravity is zero degrees, and, as such, is less than the threshold angle $\theta_{threshold}$. Based on Equation 1, the separating force $F_s$ is negligible when compared with the force of magnetic attraction $F_m$ between the magnets 30 in the lid 14 and the attractive elements 50 in the base 16. As such, the separating force $F_s$ is less than the force of magnetic attraction $F_m$, and, as a result, the force of magnetic attraction $F_m$ between the magnets 30 and the attractive elements 50 maintains the body 11 of the electronic device 10 in the closed configuration.

Similarly, even when the body 11 of the electronic device 10 is slightly tilted, if the tilt angle $\theta$ between the body 11 of the electronic device 10 and the axis 70 in the direction of the Earth's gravity remains less than the threshold angle $\theta_{threshold}$, as shown in the perspective diagram of FIG. 8, then the separating force $F_s$ is less than the force of magnetic attraction $F_m$, and, as a result, the force of magnetic attraction $F_m$ between the magnets 30 and the attractive elements 50 maintains the body 11 of the electronic device 10 in the closed configuration.

However, once the body 11 of the electronic device 10 is tilted such that the tilt angle $\theta$ between the body 11 of the electronic device 10 and the axis 70 in the direction of the Earth's gravity is greater than or equal to the threshold angle $\theta_{threshold}$, as shown in the perspective diagram of FIG. 9, then the separating force $F_s$ becomes greater than the force of magnetic attraction $F_m$. As a result, the separating force $F_s$ causes the lid 14 to separate from the base 16, thus opening the body 11 of the electronic device 10, as illustrated in the perspective diagram of FIG. 10.

As mentioned above, any combination of the magnets 30 (including the number of magnets 30, properties of the magnets 30 (such as the strength, size, and so on, of the magnets 30), and so on), the attractive elements 50 (including the number of attractive elements 50, properties of the attractive elements 50 (such as magnetic attractiveness, size, and so on, of the attractive elements 50), and so on), the position of the center of gravity 74 of the lid 14, the weight $W_L$ of the lid 14 (e.g., at the center of gravity 74 of the lid 14), the center of gravity 72 of the base 16, the weight of the base 16 (e.g., at the center of gravity 74 of the base 16), the length $L$ of the body 11, and the torque $T_{hinge}$ applied by the hinges 12, may be designed and/or adjusted to set or select the threshold angle $\theta_{threshold}$. For example, the magnets 30 and/or the attractive elements 50 may be configured to adjust the force of magnetic attraction $F_m$ shown in FIGS. 6-10 by adjusting the amount or types of alloys that exhibit magnetic attraction in the magnets 30 and/or the attractive elements 50, adjusting the size and/or dimensions of the magnets 30 and/or the attractive elements 50, adjusting the distance between the magnets 30 and/or the attractive elements 50 (e.g., when the body 11 of the electronic device 10 is in the closed configuration as illustrated in FIG. 2), and/or any other technique to tune the force of magnetic attraction $F_m$ in the magnets 30 and/or the attractive elements 50.

As another example, while the hinge torque $T_{hinge}$ applied by the hinges 12 may be negligible (e.g., approximately zero) due to the hinges 12 being designed to freely and uniformly rotate through an entire range of rotation, in some embodiments, the hinges 12 may be designed to rotate with a certain degree of freedom or provide rotational friction uniformly (e.g., through the entire range of rotation). For example, one or more hinges 12 may include one or more resistance elements, such as friction bands, torsion springs, and/or rotatable tabs and slots, which may be configured or designed to adjust the hinge torque $T_{hinge}$ applied by the one or more hinges 12. In some embodiments, the hinges 12 may enable free or approximately free rotation through one or more ranges of rotation, but provide rotational resistance through other ranges of rotation (e.g., the hinges 12 may provide non-uniform resistance throughout the entire range of rotation) As such, the hinge torque $T_{hinge}$ may be designed and/or adjusted to set or select the threshold angle $\theta_{threshold}$.

Moreover, though FIGS. 6-10 illustrate the body 11 of the electronic device 10 oriented such that the lid 14 is closer to the ground/Earth and the base 16 further away from the ground/Earth, it should be understood that the positions of the base 16 and lid 14 may be reversed, and the same concepts would apply (though the threshold angle may change based on differences in positions of the respective centers of gravity 72, 74 of the base 16 and the lid 14 and/or weights of the base 16 and the lid 14).

As illustrated, because there is no need for a finger access point or divot to be cut out of top and/or vertical surfaces of the lid 14 or the base 16 (e.g., to enable a user to gain purchase on a bottom surface of the lid 14), certain surfaces (e.g., vertical surfaces) of the lid 14 and base 16 may be uninterrupted and still accommodate the magnets 30 and attractive elements 50 (e.g., in the interiors of the lid 14 and base 16). For example, FIGS. 1-2 illustrate an uninterrupted front-facing vertical surface 92 of the base 16 and an uninterrupted front-facing vertical surface 94 of the lid 14 (at least where the front-facing vertical surface 92 of the base 16 and the front-facing vertical surface 94 of the lid 14 contact or are in near contact with each other in the closed configuration of the body 11). Similarly, the side-facing vertical surfaces (e.g., 96) of the base 16 and the side-facing vertical surfaces (e.g., 98) of the lid 14 may also be uninterrupted (at least where the side-facing vertical surfaces 96 of the base 16 and the side-facing vertical surfaces 98 of the lid 14 contact or are in near contact with each other in the closed configuration of the body 11).

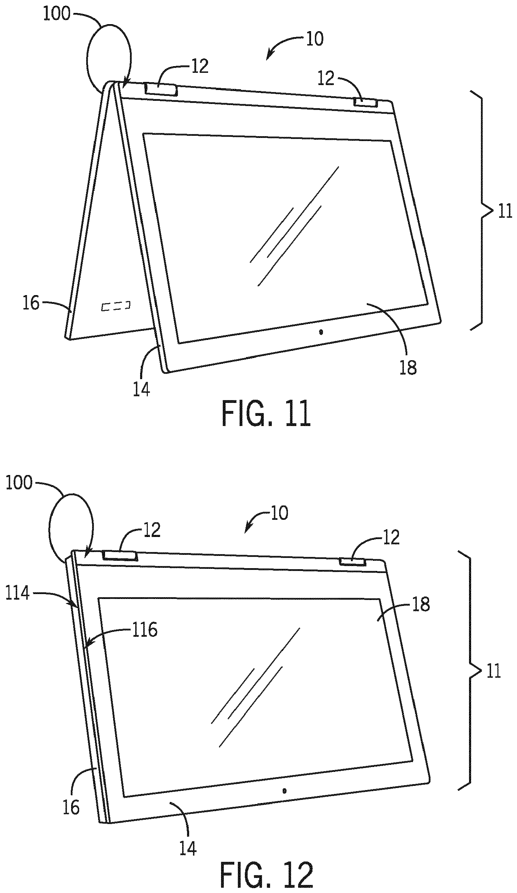

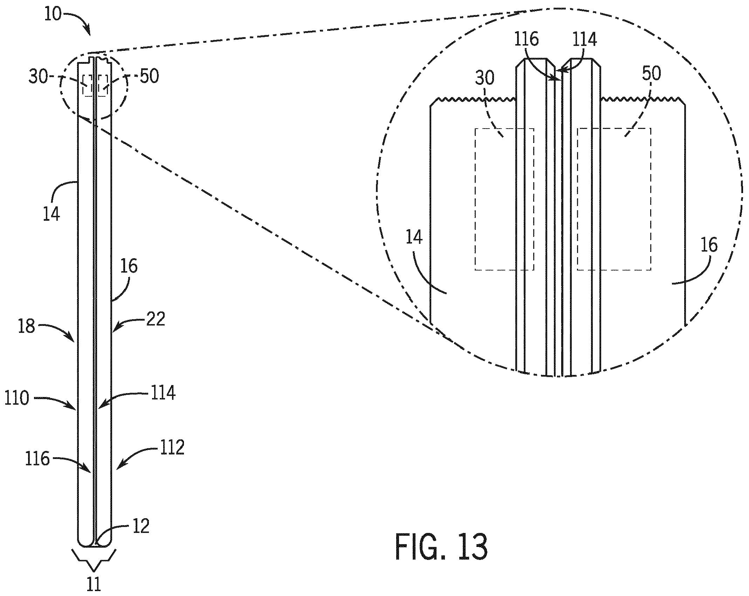

While the electronic device 10 may be a laptop, as shown in FIG. 1, it should be understood that the electronic device 10 may be any suitable device that has a body that may be opened and/or closed via a hinge. For example, FIG. 11 is a perspective diagram of the electronic device 10 having hinges 12 that enable 360 degrees or near-360 degrees of pivoting/rotation (e.g., a 2-in-1 laptop), according to embodiments of the present disclosure. As such, unlike laptops having hinges that do not enable 360 degrees or near-360 degrees of pivoting/rotation, the lid 14 may be bent at an angle 100 respective to the base 16 of more than 180 degrees. Indeed, as shown in FIG. 12, the lid 14 may be bent at an angle 100 respective to the base 16 of 360 degrees or near-360 degrees, such that the body 11 of the electronic device 10 is in a second closed configuration. That is, as shown in FIG. 2, the body 11 of the electronic device 10 is in a first closed configuration, such that a first (e.g., bottom or display-side) surface 110 of the lid 14 (e.g., having the display 18) is in contact or near contact with a first (e.g., top or keyboard-side) surface 112 of the base 16 (e.g., having the keyboard 22 or other input device 20). In FIG. 13, the lid 14 has been rotated using the hinges 12 360 degrees or near-360 degrees, such that a second (e.g., top or non-display-side) surface 114 of the lid 14 is in contact or near contact with a second (e.g., bottom or non-keyboard-side) surface 116 of the base 16, thus placing the body 11 in the second closed configuration.

The magnets 30 and the attractive elements 50 may be configured such that the force of magnetic attraction $F_m$ between the magnets 30 and the attractive elements 50 maintain the body 11 of the electronic device 10 in the first closed configuration for a first range of tilt angles (with respect to the axis 70 in the direction of the Earth's gravity), and in the second closed configuration for a second range of tilt angles (with respect to the axis 70 in the direction of the Earth's gravity). Moreover, when the body 11 is in the first closed configuration and tilted at a tilt angle $\theta$ (with respect to the axis 70 in the direction of the Earth's gravity) greater than or equal to a first threshold angle $\theta_{threshold1}$, the separating force $F_{s1}$ acting on the portion (e.g., the lid 14 or the base 16) of the body 11 that is closer to the Earth (and as defined by Equation 1) is greater than the force of magnetic attraction $F_m$, causing the portions 14, 16 to separate and the body 11 to be in an open configuration. Otherwise, if the body 11 is in the first closed configuration and tilted at a tilt angle $\theta$ less than the first threshold angle $\theta_{threshold1}$, the force of magnetic attraction $F_m$ is greater than the separating force $F_{s1}$ acting on the portion (e.g., the lid 14 or the base 16) of the body 11 that is closer to the Earth, causing the portions 14, 16 to remain together and the body 11 to remain in the first closed configuration.

Similarly, when the body 11 is in the second closed configuration and tilted at a tilt angle $\theta$ (with respect to the axis 70 in the direction of the Earth's gravity) greater than or equal to a second threshold angle $\theta_{threshold2}$, the separating force $F_{s2}$ acting on the portion (e.g., the lid 14 or the base 16) of the body 11 that is closer to the Earth (and as defined by Equation 1) is greater than the force of magnetic attraction $F_m$, causing the portions 14, 16 to separate and the body 11 to be in an open configuration. Otherwise, if the body 11 is in the second closed configuration and tilted at a tilt angle $\theta$ less than the second threshold angle $\theta_{threshold2}$, the force of magnetic attraction $F_m$ is greater than the separating force $F_{s2}$ acting on the portion (e.g., the lid 14 or the base 16) of the body 11 that is closer to the Earth, causing the portions 14, 16 to remain together and the body 11 to remain in the second closed configuration.

In some embodiments, the first range of tilt angles for which the force of magnetic attraction $F_m$ between the magnets 30 and the attractive elements 50 maintains the body 11 in the first closed configuration may be the same or approximately the same as the second range of tilt angles for which the force of magnetic attraction $F_m$ maintains the body 11 in the second closed configuration. This may be because the weight of the lid 14 and the weight of the base 16 are approximately the same. As such, the separating force $F_s$ as calculated by Equation 1 above will be approximately the same, regardless of whether the lid 14 or the base 16 is closer to the Earth/ground. Thus, the magnets 30 and the attractive elements 50 may maintain the first closed configuration and the second closed configuration at the same or approximately same tilt angles $\theta$. Accordingly, the first threshold angle $\theta_{threshold}$, may approximately equal the second threshold angle $\theta_{threshold2}$ (e.g., within 2°, 5°, 10°, or 15° of each other).

For example, FIG. 13 is a side view of the electronic device 10 of FIG. 11 in the second closed configuration, according to embodiments of the present disclosure. Any combination of the magnets 30 (including the number of magnets 30, properties of the magnets 30 (such as the strength, size, and so on, of the magnets 30), and so on), the attractive elements 50 (including the number of attractive elements 50, properties of the attractive elements 50 (such as magnetic attractiveness, size, and so on, of the attractive elements 50), and so on), the position of the center of gravity 74 of the lid 14, the weight $W_L$ of the lid 14 (e.g., at the center of gravity 74 of the lid 14), the center of gravity 72 of the base 16, the weight of the base 16 (e.g., at the center of gravity 74 of the base 16), the length $L$ of the body 11, and the torque $T_{hinge}$ applied by the hinges 12, may be designed and/or adjusted to set or select the threshold angles $\theta_{threshold1}$ and $\theta_{threshold2}$. For example, the magnets 30, the attractive elements 50, and/or the hinges 12 may be designed such that the threshold angles $\theta_{threshold}$, and $\theta_{threshold2}$ are approximately equal.

Advantageously, the magnets 30 and the attractive elements 50 may be dimensioned to fit into dead spaces (e.g., spaces where there are no components or circuitry) in the portions of the body 11 of the electronic device 10 and/or to have a decreased or minimum surface area. As such, the presently disclosed systems and devices may avoid taking excessive valuable space in the electronic device 10, preventing a reduction of processing, memory, and/or power components to accommodate a latching device, thus increasing or maximizing the processing capabilities, memory capacity, and/or power capacity of the electronic device 10. Costly modifications and/or implementations to the dimensions of the lid 14 and/or the base 16 may also be avoided, as certain surfaces of the lid 14 and base 16 (e.g., the front-facing vertical surface 92 of the base 16, the front-facing vertical surface 94 of the lid 14, the side-facing vertical surfaces 96 of the base 16, the side-facing vertical surfaces 98 of the lid 14, and so on) may be uninterrupted and still accommodate the magnets and attractive elements (e.g., in the interiors of the lid 14 and base 16). Moreover, the magnets 30 and attractive elements 50 may not require a power source or a controller for operation, thus avoiding power or processing resource usage during operation and avoiding memory usage for storing instructions associated with operation.

While the embodiments set forth in the present disclosure may be susceptible to various modifications, implementations, and/or alternative forms, specific embodiments have been shown by way of example in the drawings and have been described in detail herein. However, it may be understood that the disclosure is not intended to be limited to the particular forms disclosed. The disclosure is to cover all modifications, implementations, equivalents, and alternatives falling within the spirit and scope of the disclosure as defined by the following appended claims.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for [perform]ing [a function]..." or "step for [perform]ing [a function]...", it is intended that such elements are to be interpreted under 35 U.S.C. 112(f). However, for any claims containing elements designated in any other manner, it is intended that such elements are not to be interpreted under 35 U.S.C. 112(f).

## Claims

1.  A computing device, comprising:
    a body comprising:

    a first housing portion comprising one or more magnets;
    a second housing portion comprising one or more attractive elements aligned with the one or more magnets, wherein the one or more magnets generate a force of magnetic attraction with the one or more attractive elements; and
    one or more hinges joining the first housing portion to the second housing portion, wherein the one or more hinges enable the second housing portion to rotate relative to the first housing portion, wherein the body is configured to:

    be placed in a closed configuration when the first housing portion is in contact with the second housing portion;
    be placed in an open configuration when the first housing portion is not in contact with the second housing portion; and
    transition from the closed configuration to the open configuration in response to a separating force being greater than the force of magnetic attraction, wherein the separating force is based at least in part on a first weight of the first housing portion, a second weight of the second housing portion, and an angle that the body is tilted with respect to an axis of the Earth's gravity.

2.  The computing device of claim 1, wherein the separating force is based at least in part on a first center of gravity of the first housing portion, a second center of gravity of the second housing portion, a length of the body, a torque applied by the one or more hinges, or any combination thereof.

3.  The computing device of claim 1 or claim 2, wherein the body is configured to transition from the open configuration to the close configuration in response to the separating force being less than the force of magnetic attraction.

4.  The computing device of any of claims 1-3, wherein the angle is greater than or equal to 30°.

5.  The computing device of any of claims 1-4, wherein the first housing portion comprises one or more input devices, and/or wherein the second housing portion comprises a display, and/or wherein the one or more attractive elements comprise one or more additional magnets.

6.  The computing device of any of claims 1-5, wherein the separating force is greater than the force of magnetic attraction in response to the angle being greater than a threshold angle.

7.  The computing device of claim 6, wherein the body is configured to transition from the open configuration to the close configuration in response to the separating force being less than the force of magnetic attraction, wherein the separating force is less than the force of magnetic attraction in response to the angle being less than the threshold angle.

8. The computing device of any of claims 1-7, wherein the one or more hinges enable 360° rotation of the first housing portion with respect to the second housing portion.

9. The computing device of any of claims 1-8, wherein the first housing portion comprises a top surface, wherein the top surface of the first housing portion comprises one or more input devices, wherein the second housing portion comprises a bottom surface, wherein the bottom surface of the second housing portion comprises a display, wherein the closed configuration comprises the top surface of the first housing portion being in contact with the bottom surface of the second housing portion.

10. The computing device of claim 9, configured to transition from the open configuration to a second closed configuration in response to a second separating force being less than the force of magnetic attraction, wherein the second separating force is based at least in part on the first weight of the first housing portion, the second weight of the second housing portion, and a second tilt angle that the body is tilted with respect to an axis of the Earth's gravity.

11. The computing device of claim 10, wherein the first housing portion comprises a second bottom surface, wherein the second housing portion comprises a second top surface, wherein the one or more hinges enable the body to be placed in a second closed configuration, wherein the second closed configuration comprises the second bottom surface of the first housing portion being in contact with the second top surface of the second housing portion.

12. The computing device of claim 11, wherein the second separating force is greater than the force of magnetic attraction in response to the second tilt angle being greater than a second threshold angle.

13. The computing device of claim 12, wherein the threshold angle is approximately the same as the second threshold angle.

14. The computing device of any of claims 1-8, wherein the first housing portion comprises one or more input devices and a first front-facing vertical surface, wherein the second housing portion comprises a display and a second front-facing vertical surface, wherein a first portion of the first front-facing vertical surface is in contact with a second portion of the second front-facing vertical surface when the first housing portion and the second housing portion are in the closed configuration, and wherein the first portion of the first front-facing vertical surface and the second portion of the second front-facing vertical surface are uninterrupted.

15. The computing device of any of claims 1-8, wherein:

the first housing portion comprises one or more input devices, a first side-facing vertical surface, and a second side-facing vertical surface;
the second housing portion comprises a display, a third side-facing vertical surface, and a fourth side-facing vertical surface;
a first portion of the first side-facing vertical surface is in contact with a second portion of the third side-facing vertical surface when the first housing portion and the second housing portion are in the closed configuration;
a third portion of the second side-facing vertical surface is in contact with a fourth portion of the fourth side-facing vertical surface when the first housing portion and the second housing portion are in the closed configuration; and
the first portion of the first side-facing vertical surface, the second portion of the third side-facing vertical surface, the third portion of the second side-facing vertical surface, and the fourth portion of the fourth side-facing vertical surface are interrupted.

FIG. 1

FIG. 2

FIG. 3

FIG. 4

FIG. 5

FIG. 6

FIG. 7    FIG. 8    FIG. 9    FIG. 10

EP 3 798 791 A1

FIG. 11

FIG. 12

FIG. 13

EP 3 798 791 A1

Europäisches
Patentamt

European
Patent Office

Office européen
des brevets

# EUROPEAN SEARCH REPORT

Application Number

EP 20 18 1139

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/236848 A1 (KIM HYONG-KON [KR]) 27 October 2005 (2005-10-27) * paragraph [0037] - paragraph [0064]; figures 2-4 * | 1-15 | INV. G06F1/16 E05B65/00 |
| X | US 2018/054905 A1 (MAEAETTAE ESA [FI] ET AL) 22 February 2018 (2018-02-22) * abstract * * paragraph [0017] - paragraph [0030]; figures 1A-1D * | 1-15 | |
| X | US 10 401 916 B1 (DELL PRODUCTS LP [US]) 3 September 2019 (2019-09-03) * column 1, line 61 - column 2, line 1 * * column 11, line 32 - column 12, line 7; figures 2,3A-3D * | 1-15 | |

TECHNICAL FIELDS
SEARCHED (IPC)

G06F
E05B

The present search report has been drawn up for all claims

| Place of search | Date of completion of the search | Examiner |
|---|---|---|
| The Hague | 24 November 2020 | Schröter, Marcel |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

**ANNEX TO THE EUROPEAN SEARCH REPORT
ON EUROPEAN PATENT APPLICATION NO.**                    EP 20 18 1139

This annex lists the patent family members relating to the patent documents cited in the above-mentioned European search report.
The members are as contained in the European Patent Office EDP file on
The European Patent Office is in no way liable for these particulars which are merely given for the purpose of information.

24-11-2020

| Patent document cited in search report | | Publication date | Patent family member(s) | | Publication date |
|---|---|---|---|---|---|
| US 2005236848 | A1 | 27-10-2005 | CN | 1690916 A | 02-11-2005 |
| | | | KR | 20050103840 A | 01-11-2005 |
| | | | US | 2005236848 A1 | 27-10-2005 |
| US 2018054905 | A1 | 22-02-2018 | US | 2018054905 A1 | 22-02-2018 |
| | | | US | 2019191578 A1 | 20-06-2019 |
| US 10401916 | B1 | 03-09-2019 | NONE | | |

EPO FORM P0459

For more details about this annex : see Official Journal of the European Patent Office, No. 12/82